**Europäisches Patentamt**

**European Patent Office**

**Office européen des brevets**

(19)

(11) Veröffentlichungsnummer: **0 034 216**
**B1**

(12) # EUROPÄISCHE PATENTSCHRIFT

(45) Veröffentlichungstag der Patentschrift:
**14.03.84**

(21) Anmeldenummer: **80107885.8**

(22) Anmeldetag: **13.12.80**

(51) Int. Cl.³: **F 16 H 39/50**, F 04 B 49/08

(54) Vorrichtung zum Steuern eines Hydromotors.

(30) Priorität: **15.01.80 DE 3001167**

(43) Veröffentlichungstag der Anmeldung:
**26.08.81 Patentblatt 81/34**

(45) Bekanntmachung des Hinweises auf die Patenterteilung:
**14.03.84 Patentblatt 84/11**

(84) Benannte Vertragsstaaten:
**CH FR IT LI**

(56) Entgegenhaltungen:
**DE - A - 2 049 884**
**DE - A - 2 459 550**
**DE - A - 2 551 088**
**US - A - 3 747 350**
**US - A - 3 901 032**
**US - A - 3 954 047**

(73) Patentinhaber: **Mannesmann Rexroth GmbH,**
**Postfach 340 Jahnstrasse 3 - 5, D-8770 Lohr/Main (DE)**

(72) Erfinder: **Müller, Albert, Inselstrasse 7,**
**D-8750 Aschaffenburg (DE)**

(74) Vertreter: **Patentanwälte Phys. Bartels, Dipl.-Ing. Fink**
**Dipl.-Ing. Held, Lange Strasse 51,**
**D-7000 Stuttgart 1 (DE)**

# Vorrichtung zum Steuern eines Hydromotors

Die Erfindung bezieht sich auf eine Vorrichtung entsprechend dem Oberbegriff des Anspruchs 1.

Bei einer bekannten Vorrichtung der vorgenannten Art wirkt auf den Stellkolben größeren Durchmessers der vom ersten Regelventil gesteuerte Druck der wesentlich geringer ist, als der für das Anlaufen des Hydromotors erforderliche Druck. Beim Zuschalten des Hydromotors muß sich daher ein zu dessen Antrieb erforderlicher Druck erst aufbauen, was verhältnismäßig viel Zeit in Anspruch nimmt (DE-A-25 51 088).

Der vorliegenden Erfindung liegt die Aufgabe zugrunde, eine Vorrichtung der vorgenannten Art zum Steuern eines Hydromotors derart auszubilden, daß der Hydromotor nach dessen Zuschalten mit geringstmöglicher Verzögerung anlaufen kann. Diese Aufgabe wird durch die Merkmale im Kennzeichnungsteil des Anspuchs 1 erfindungsgemäß gelöst. Infolge der Überbrückung des ersten Regelventils, das einen geringeren Druck als das zweite Ventil regelt, wird das zweite Regelventil wirksam, dessen Kraftspeicher gegebenenfalls zusammen mit auf der Kraftspeicherseite wirksamen Druck für den vom zweiten Regelventil zu steuernden Druck maßgebend ist. Der Kraftspeicher und gegebenenfalls der auf der Kraftspeicherseite wirkende Druck wird so gewählt, daß die Stellpumpe einen Druck erzeugt, der höher, insbesondere etwa um 30% höher, als der zum Antrieb des Hydromotors notwendige Druck liegt. Dadurch läuft der Hydromotor praktisch verzögerungsfrei an.

Die Merkmale des Anspruchs 4 ermöglichen den auf der Kraftspeicherseite des zweiten Regelventils wirksamen Druck nach Belieben zu vergrößern, so daß dieser Druck unabhängig von der Einstellung des einstellbaren Kraftspeichers ist.

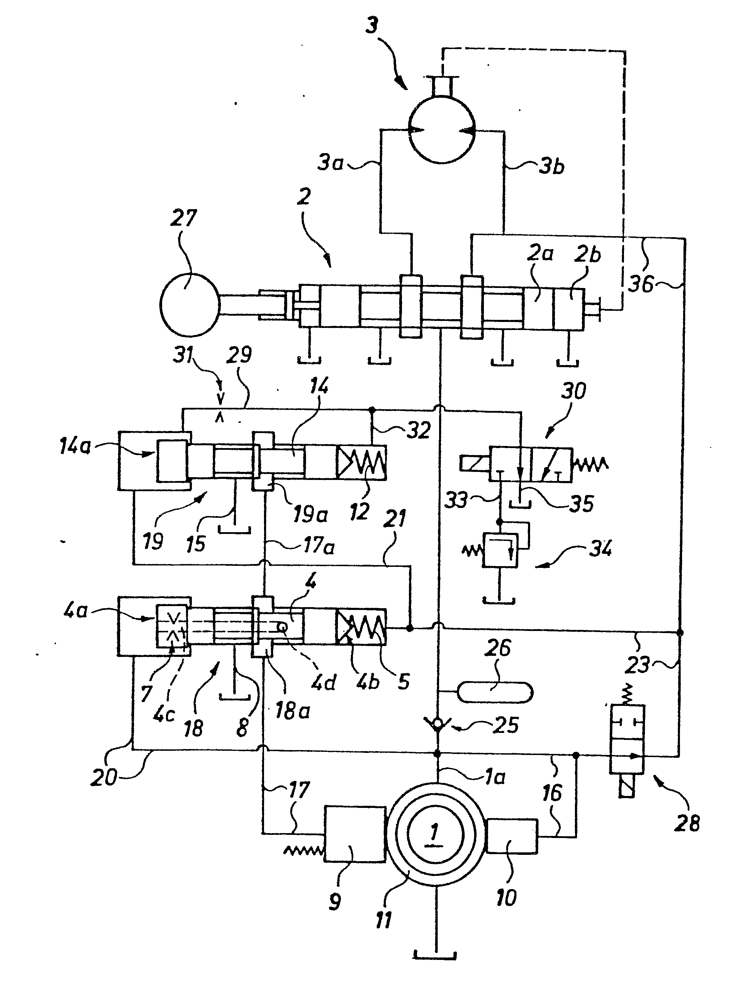

Weitere Vorteile ergeben sich aus den übrigen Ansprüchen, der Beschreibung und der Zeichnung. In dieser ist eine Vorrichtung zum Steuern eines Hydromotors als Ausführungsbeispiel des Gegenstandes der Erfindung schematisch dargestellt.

Eine Stellpumpe 1 hat einen Stellring 11, der in der einen Richtung von einem Stellkolben 9 und in der anderen Richtung von einem Stellkolben 10 verschiebbar ist. Der Stellkolben 10 hat einen kleineren Durchmesser als der Stellkolben 9. Über eine Leitung 16 ist die vom Stellring 11 abgewandte Seite des Stellkolbens 10 mit der Druckseite 1a der Stellpumpe 1 verbunden und die vom Stellring abgewandte Seite des Stellkolbens 9 ist über eine Leitung 17 mit einem Regelraum 18a eines ersten Regelventil 18 verbunden. Der Regelraum 18a ist über eine Leitung 17a mit einem Regelraum 19a eines zweiten Regelventils 19 verbunden.

Das Regelventil 18 hat einen Regelkolben 4 und das zweite Regelventil 19 hat einen Regelkolben 14.

Die in der Zeichnung linke Stirnseite 4a des Regelkolbens 4 ist über eine Leitung 20 ebenfalls mit der Druckseite 1a der Stellpumpe 1 verbunden, und die gegenüberliegende Stirnseite 4b ist an eine Leitung 23 angeschlossen. Auf die Stirnseite 4b des Regelkolbens 4 wirkt zugleich die Kraft einer Feder 5. Der Regelkolben 4 hat eine von der Stirnseite 4a ausgehende Sackbohrung 4c mit einer blendenartigen Verengung 7. Die Sackbohrung 4c wird im Bereich des Regelraumes 18a von einer quer dazu angeordneten Bohrung 4d geschnitten. Damit steht der Regelraum 18a über die Sackbohrung 7 und die Leitung 20 in Verbindung mit der Druckseite 1a der Stellpumpe 1. Die beiden Leitungen 16 und 23 sind durch ein 2-Wege-Schaltventil 28 nach Belieben miteinander zu verbinden oder voneinander zu trennen. Beim Verbinden der beiden Leitungen 16, 23 durch das 2-Wege-Schaltventil 28 wird das erste Regelventil 18 kurzgeschlossen.

Solange das Produkt aus dem am Regelkolben 4 wirkenden, entgegen der Kraft der Feder 5 gerichteten Druckgefälle und der wirksamen Querschnittsfläche des Regelkolbens 4 kleiner ist als die Kraft der Feder 5 nimmt der Regelkolben 4 seine gezeigte Ausgangsstellung ein, in welcher der Regelraum 18a vom Regelkolben 4 gegenüber einer Abflußleitung 8 geschlossen ist. Damit herrscht an der vom Stellring 11 abgewandten Stirnseite des Stellkolbens 9 derselbe Druck wie an der vom Stellring 11 abgewandten Stirnseite des Kolbens 10. Da der Stellkolben 9 eine größere wirksame Querschnittsfläche aufweist als der Stellkolben 10, verschiebt sich bei gleichem Druck an beiden Stellkolben der Stellring 11 in Richtung zum Stellkolben 10, wodurch sich die Fördermenge der Stellpumpe 1 vergrößert.

Sobald das Produkt aus dem am Regelkolben 4 wirkenden Druckgefälle und dem wirksamen Querschnitt des Regelkolbens 4 größer als die Kraft der Feder 5 ist, wird der Regelkolben 4 entgegen der Kraft der Feder 5 verschoben, und der Regelraum 18a wird mit der Abflußleitung 8 verbunden. Wegen der damit verbundenen Verminderung des Druckes im Regelraum 18a wird auch der auf den Stellkolben 9 wirkende Druck vermindert, und der Stellring 11 wird vom Stellkolben 10 in Richtung des Stellkolbens 9, d. h. in Richtung kleinerer Fördermenge, verschoben. Der Regelkolben 4 nimmt eine Regelstellung ein, in welcher der hierdurch bestimmte, den Kolben 9 beaufschlagende Druck im Regelraum 18a mit der wirksamen Querschnittsfläche des Stellkolbens 9 dasselbe Produkt bildet wie der den Stellkolben 10 beaufschlagende Pumpendruck mit der wirksamen Querschnittsfläche des Stellkolbens 10.

Über ein zur Stellpumpe 1 schließendes Rückschlagventil 25 ist mit dieser ein 4-Wege-Ventil 2 verbunden, wobei an die Verbindungsleitung nach dem Rückschlagventil ein Druckspeicher 26 angeschlossen ist. Das 4-Wege-Ventil 2 dient zum Steuern eines Hydromotors 3, dessen beide Seiten mittels Verbindungsleitungen 3a und 3b mit dem 4-Wege-Ventil 2 verbunden sind. Das 4-Wege-Ventil 2 hat ein axial verschiebbares Ventilglied 2a, dessen Verschiebelage gegenüber dem Ventilgehäuse 2b mittels eines Schrittmotors 27 steuerbar ist und von dem zwei Steuerkanten mit je einer Steuerkante im Ventilgehäuse 2b drosselnde Durchflüsse freigebend oder sperrend zusammenwirken. Das Ventilgehäuse 2b ist mechanisch mit dem Antrieb, z. B. mit der Abtriebswelle des Hydromotors 3, in der Weise verbunden, daß sich das Abtriebsglied des Hydromotors 3 jeweils nur um vom Schrittmotor vorgegebene Beträge bewegen, insbesondere drehen, kann.

Beim Verschieben des Ventilglieds 2a des 4-Wege-Ventils 2 zur Betätigung des Hydromotors 3 tritt ein Druckgefälle auf der Druckseite 1a der Stellpumpe 1 auf, wodurch der Regelkolben 4 des ersten Regelventils 18 so weit verschoben wird, bis das am 4-Wege-Ventil 2 auftretende Druckgefälle in Verbindung mit dem Regelquerschnitt des Regelkolbens 4 der Kraft der Feder 5 entspricht. Ändert sich das Druckgefälle am 4-Wege-Ventil 2 und damit auch die Durchflußmenge, so nimmt der Regelkolben 4 zwangsläufig eine neue Regellage ein, in der ein solcher Steuerdruck für den Stellkolben 9 erzeugt wird, daß dieser den Stellring 11 in eine Stellung verschiebt, in der infolge der damit sich ändernden Fördermenge der Stellpumpe 1 das ursprüngliche Druckgefälle am 4-Wege-Ventil 2 und damit auch die ursprüngliche Durchflußmenge wieder hergestellt wird.

Steigt der Druck vor dem Hydromotor 3 auf einen Wert, der über dem Einstellwert der den Regelkolben 14 des zweiten Regelventils 19 in Schließrichtung belastenden Feder 12 liegt, verschiebt sich der Regelkolben 14 infolge der Druckbeaufschlagung von dessen in der Zeichnung linken Stirnfläche 14a durch das Druckmittel über die mit der Leitung 23 verbundene Leitung 21 entgegen der Kraft der Feder 12 und gibt die Verbindung zwischen dem Regelraum 19a und einer Abflußleitung 15 frei. Durch die damit verbundene Entlastung des Regelraums 19a sowie über die Verbindungsleitung 17a, den Regelraum 18a und die Leitung 17 wird der Druck auf den Stellkolben 9 verringert. Der Stellring 11 verschiebt sich deshalb in Richtung des Stellkolbens 9 und damit in Richtung geringerer Fördermenge der Pumpe 1. Der Stellring 11 wird so lange verstellt, bis der Druck vor dem Hydromotor 3 wieder den an der Feder 12 des zweiten Regelventils 19 eingestellten Wert erreicht bzw. unterschritten hat. Mit Erreichen dieses Wertes schließt der Regelkolben 14 die Verbindung zwischen dem Regelraum 19a und der Abflußleitung 15.

Solange das zweite Regelventil 19 geöffnet ist und damit den maximal zulässigen Druck an der Stellpumpe 1 durch entsprechende Druckbeaufschlagung des Stellkolbens 9 regelt, ist das die Durchflußmenge regelnde erste Regelventil 18 außer Funktion. Das die Durchflußmenge regelnde erste Regelventil 18 wird an der Feder 5 eingestellt, und das den Druck der Stellpumpe 1 begrenzende zweite Regelventil 19 wird an der Feder 12 eingestellt. Damit die während der Regelbewegung des Regelkolbens 14 bzw. 4 abzuführende Steuerflüssigkeitsmenge klein bleibt, erhält die Drosselstelle 7 über die die Steuerflüssigkeit dem Regelkreis zugeführt wird, einen möglichst kleinen Querschnitt.

Mit der Steuerseite 14a des zweiten Regelventils 19 ist über eine Leitung 29 ein 3-Wege-Ventil 30 verbunden. In die Leitung 29 ist eine Drosselstelle 31 eingeschaltet. Nach der Drosselstelle 31 ist über eine Leitung 32 die Leitung 29 mit dem die Feder 12 aufnehmenden Raum des zweiten Regelventils 19 verbunden. Das 3-Wege-Ventil 30 ist über eine Leitung 33 mit einem nach Belieben einstellbaren Druckbegrenzungsventil 34 und über eine Abflußleitung 35 mit einem Vorratsbehälter verbunden. Beim Verbinden des Druckbegrenzungsventils 34 mit dem die Feder 12 aufnehmenden Raum des zweiten Regelventils 19 über das 3-Wege-Ventil 30 kann der maximale Nullhubdruck des Regelkolbens 14 unabhängig von der Einstellung der Feder 12 eingestellt werden. Die in der Leitung 29 vorhandene Drosselstelle 31 begrenzt den Steuerstrom, der von der Leitung 3b über eine Leitung 36 entnommen wird, die mit der Leitung 23 verbunden ist, an welche die mit der Stirnseite 14a verbundene Leitung 21 anschließt.

Vor dem Einschalten des Schrittmotors 27 nimmt das 2-Wege-Schaltventil 28 seine in der Zeichnung dargestellte Steuerlage ein, in der die beiden Leitungen 16 und 23 miteinander verbunden sind und das erste Regelventil 18 überbrückt ist, das die Fördermenge der Stellpumpe 1 regelt. Durch diese Überbrückung wirkt auf beiden Seiten des Regelkolbens 4 der gleiche Druck, so daß dieser Regelkolben durch die Feder 5 geschlossen gehalten wird und keine Verbindung zwischen dem Stellkolben 9 und der Abflußleitung 8 besteht.

Über die Leitungen 16, 23 und 21 wirkt bei geöffnetem 2-Wege-Schaltventil 28 der Druck auf der Druckseite 1a der Stellpumpe 1 auf die Stirnseite 14a des Regelkolbens 14 des Druckregelventils 19 in dessen Öffnungsrichtung allein entgegen der Kraft der Feder 12, solange wie dargestellt der die Feder 12 aufnehmende Raum des zweiten Regelventils 19 über das 3-Wege-Ventil 30 mit der Abflußleitung 35 verbunden ist. Sobald dann die auf die Stirnseite 14a wirkende, vom Pumpendruck verursachte Kraft der Feder 12 übersteigt, wird der Regelkolben 14 aus seiner Schließlage bewegt, und der Regelraum 19a wird mit der Abflußleitung 15 verbunden. Über die Leitung 17a, den Regelraum 18a und die Leitung 17 wirkt der vom Regelkolben 14 des zweiten Regelventils 19 gesteuerte Druck auf den Stellkolben 9, wodurch der Stellring 11 der Stellpumpe 1 derart verschoben wird, daß sich in der Druckleitung 1a ein maximaler, durch die Einstellung der Feder 12 vorgegebener Druck einstellt.

Wird nun das 4-Wege-Ventil 2 betätigt und hierdurch die Zuleitung zum Hydromotor 3 sowie dessen Abfluß zu einem Vorratsbehälter geöffnet, steht ein von der Einstellung der Feder 12 vorgegebener Druck zur Verfügung, der um etwa 30% größer als der vom Hydromotor 3 geforderte Arbeitsdruck ist. Hierdurch läuft der Hydromotor 3 praktisch verzögerungsfrei an.

Zugleich mit der Betätigung des Schrittmotors 27 und damit der Bewegung des Stellgliedes 2a des 4-Wege-Ventils 2 wird das 2-Wege-Schaltventil 28 derart umgeschaltet, daß die beiden Leitungen 16 und 23 voneinander getrennt sind. Dadurch kommt das erste Regelventil 18 wie vorbeschrieben zur Wirkung, das zur mengenabhängigen Einstellung der Stellpumpe 1 bei dem vom Hydromotor 3 geforderten Druck dient.

Ein größerer Anfangsdruck der Stellpumpe 1 kann durch Betätigen des 3-Wege-Ventils 30 eingestellt werden, wodurch das einstellbare Druckbegrenzungsventil 34 zur Wirkung kommt.

Bei Anwendung des Druckbegrenzungsventils 34 ist eine entsprechende Einstellung der Feder 12 nicht erforderlich.

## Patentansprüche

1. Vorrichtung zum Steuern eines Hydromotors (3) mit einer Stellpumpe (1), deren Stellglied (11) von zwei gegeneinander wirkenden, mit unterschiedlichen Durchmessern ausgebildeten Stellkolben (9, 10) verstellbar ist, von denen der Stellkolben (10) kleineren Durchmessers mit der Druckseite (1a) der Pumpe verbunden ist, mit zwei Regelventilen (18, 19) für Druckregelung, deren Regelräume (18a, 19a) miteinander und mit dem Stellkolben (9) größeren Durchmessers verbunden sind und deren Regelkolben (4, 14) jeweils unter der Wirkung eines Kraftspeichers (5, 12) stehen, wobei der Regelkolben (4) des ersten Regelventil (18) auf der vom Kraftspeicher (5) abgewandten Seite unmittelbar und auf der anderen Seite über eine einstellbare Drosselstelle (2) mit der Druckseite der Pumpe verbunden ist und wobei der Regelkolben (14) des zweiten Regelventils (19) auf seiner vom Kraftspeicher abgewandten Seite ebenfalls über die einstellbare Drosselstelle (2) mit der Druckseite der Pumpe verbunden ist, und mit einer mit einer Drosselstelle (7) versehenen Verbindung zwischen der Druckseite der Pumpe und den Regelräumen (18a, 19a) der beiden Regelventile, dadurch gekennzeichnet, daß die voneinander abgewandten Seiten des Regelkolbens (4) des ersten Regelventils (18) durch ein Schaltventil (28) miteinander verbindbar und voneinander trennbar sind, daß der Kraftspeicher (12) im zweiten Regelventil (19) so gewählt ist, daß beim Beaufschlagen der beiden Seiten (4a, 4b) des Regelkolbens (4) des ersten Regelventils (18) mit gleichem Druck die Stellpumpe (1) einen Druck erzeugt, der über dem Arbeitsdruck des Hydromotors (3) liegt, und daß die einstellbare Drosselstelle (2) dem Hydromotor (3) zu dessen Steuerung zugeordnet ist.

2. Vorrichtung nach Anspruch 1, dadurch gekennzeichnet, daß die einstellbare Drosselstelle (2) aus mechanisch miteinander verbundenen Drosselstellen besteht, welche Bestandteil eines nach Belieben steuerbaren, zwei voneinander getrennte Steuerkanten sowie ein Steuerglied (2a) aufweisenden Steuerventils (2) sind.

3. Vorrichtung nach Anspruch 2, dadurch gekennzeichnet, daß das Ventilgehäuse (2b) des Steuerventils (2) mit einem Abtriebsglied des Hydromotors (3) mechanisch verbunden ist.

4. Vorrichtung nach einem der vorhergehenden Ansprüche, dadurch gekennzeichnet, daß die beiden druckbeaufschlagbaren Enden des Regelgliedes (14) des zweiten Regelventils (19) über eine Drosselstelle (31) miteinander verbunden sind und daß das kraftspeicherseitige Ende dieses Regelgliedes wahlweise mit einem einstellbaren Druckbegrenzungsventil (34) oder mit einem Vorratsbehälter verbindbar ist.

## Claims

1. A device for controlling a hydraulic motor (3) with a variable delivery pump (1), the adjusting member (11) of which is adjustable by two adjusting pistons (9, 10), which act one against the other and are designed so as to have different diameters and of which the adjusting piston (10) of a smaller diameter is connected to the pressure side (1a) of the pump, and with two regulating valves (18, 19) for pressure regulation, the regulating chambers (18a, 19a) of which are connected to each other and to the adjusting piston (9) of the larger diameter and the regulating pistons (4, 14) of which are subjected to the action of a respective accumulator (5, 12), the regulating piston (4) of the first regulating valve (18) being connected to the pressure side of the pump directly at the end that is directed away from the accumulator (5) and being connected thereto via a settable restrictor (2) at the other end and the regulating piston (14) of the second regulating valve (19) being also connected, at the end that is directed away from the accumulator, to the pressure side of the pump via the settable restrictor (2), and with a connection, which is provided with a restrictor (7), between the pressure side of the pump and the regulating chambers (18a, 19a) of the two regulating valves, characterised in that the ends, which are directed away from each other, of the regulating piston (4) of the first regulating valve (18) are connectable to and separable from each other by a pilot valve (28), and in that the accumulator (12) in the second regulating valve (19) has been chosen to be such that when the same pressure is applied to the two ends (4a, 4b) of the regulating piston (4) of the first regulating valve (18), the variable delivery pump (1) produces a pressure which is above the working pressure of the hydraulic motor (3), and in that the settable restrictor (2) is associated with the hydraulic motor (3) for the control thereof.

2. A device as claimed in Claim 1, characterised in that the settable restrictor (2) consists of mechanically interconnected restrictors which form part of a control valve (2), which is controllable as desired and has two separate control edges as well as a control member (2a).

3. A device as claimed in Claim 2, characterised in that the valve housing (2b) of the control valve (2) is mechanically connected to an output member of the hydraulic motor (3).

4. A device as claimed in one of the preceding Claims, characterised in that the two pressure-applicable ends of the regulating member (14) of the second regulating valve (19) are connected to each other via a restrictor (31), and in that the accumulator end of this regulating member is optionally connectable to an adjustable pressure limiting valve (34) or to a reservoir.

## Revendications

1. Dispositif pour commander un moteur hydraulique (3) qui comprend une pompe de réglage (1) dont l'organe de réglage (2) est déplaçable au moyen de deux pistons de réglage (9, 10) ayant des diamètres différents et agissant à l'opposé, dont le piston de réglage (10) qui a le plus petit diamètre, est relié au refoulement (1a) de la pompe, deux valves de réglage (18, 19) pour le réglage de la pression, dont les chambres (18a, 19a) sont reliées ensemble et au piston de réglage (9) ayant un plus grand diamètre et dont les pistons de réglage (4, 14) sont respectivement soumis à l'action d'un réservoir de force (5, 12), la disposition étant telle que le piston (4) de la première valve de réglage (18) est relié au refoulement de la pompe directement sur le côté opposé au réservoir de pression (5) et par un point d'étranglement réglable (2) de l'autre côté, tandis que le côté opposé au réservoir de pression du piston (14) de la seconde valve de réglage (19) est également relié au refoulement de la pompe par l'étranglement réglable (2) et une liaison pourvue d'un point d'étranglement (7) entre le refoulement de la pompe et les chambres de réglage (18a, 19a) des deux valves de réglage, caractérisé en ce que les deux côtés mutuellement opposés du piston (4) de la première valve de réglage (18) peuvent être reliés ensemble et séparés par une valve de commutation (28), en ce que le réservoir de force (12) de la seconde valve de réglage (19) est choisi de façon que quand une même pression s'exerce sur les deux côtés (4a, 4b) du piston (4) de la première valve de réglage (18), la pompe (1) développe une pression qui est supérieure à la pression de travail du moteur hydraulique (3) et en ce que le point d'étranglement réglable (2) est affecté au moteur hydraulique (3) pour la commande de celui-ci.

2. Dispositif selon la revendication 1, caractérisé en ce que le point d'étranglement (2) se compose de deux points d'étranglement reliés mécaniquement l'un à l'autre qui font partie de l'organe de commande ou du tiroir (2a) d'une valve de commande (2) pouvant être commandée à volonté et présentant deux bords de commande séparés l'un de l'autre.

3. Dispositif selon la revendication 2, caractérisé en ce que l'enveloppe (2b) de la valve de commande (2) est reliée mécaniquement à un organe de sortie du moteur hydraulique (3).

4. Dispositif selon l'une quelconque des revendications précédentes, caractérisé en ce que les deux extrémités de l'organe de réglage (14) de la seconde valve de réglage (19), auxquelles peut être appliquée une pression sont reliées ensemble par un point d'étranglement (31) et en ce que l'extrémité voisine du réservoir de force de cet organe de réglage peut être reliée sélectivement à une valve de réglage de pression réglable (34) ou à un réservoir.